# EUROPÄISCHE PATENTSCHRIFT

(11) **EP 2 698 308 B1**
(45) Veröffentlichungstag und Bekanntmachung des Hinweises auf die Patenterteilung: **18.09.2019**
(21) Anmeldenummer: 13004044.7
(22) Anmeldetag: 14.08.2013
(51) Int. Cl.: B62J 11/00, B62J 99/00

(54) **Halterung für eine Bedien- und/oder Anzeigeeinheit**
Mounting for an operating and/or display unit
Support pour une unité de commande et/ou d'affichage

(30) Priorität: 15.08.2012 DE 102012016098
(43) Veröffentlichungstag der Anmeldung: 19.02.2014
(73) Patentinhaber: Marquardt Verwaltungs-GmbH, 78604 Rietheim-Weilheim (DE)
(72) Erfinder: Weisser, Dietmar, 78532 Tuttlingen (DE); Götz, Martin, 78048 Villingen-Schwenningen (DE)
(74) Vertreter: Otten, Roth, Dobler & Partner mbB Patentanwälte

(56) Entgegenhaltungen:
- EP-A2- 0 856 459
- EP-A2- 1 065 140
- DE-A1- 10 141 750
- DE-A1-102005 036 112
- DE-A1-102007 034 311
- DE-U1- 20 119 499
- DE-U1- 20 314 073
- DE-U1- 29 819 852
- FR-A1- 2 868 034
- KR-A- 20110 062 675
- US-A1- 2012 199 620
- US-B1- 6 265 967

## Beschreibung

Die Erfindung betrifft eine Halterung für eine Bedien- und/oder Anzeigeeinheit an einem Fahrzeug mit einem ein Lenkerrohr umfassenden Lenker, wie einem Fahrrad, einem Pedelec, einem E-Bike, einem Motorrad o. dgl., mit einer Befestigung für die Fixierung am Lenker.

Eine derartige Halterung ist insbesondere für ein Fahrzeug mit einem Lenker, wie für ein Fahrrad, ein Pedelec, ein E-Bike, ein Motorrad o. dgl., geeignet. Die Halterung dient zur Anordnung einer Bedien- und/oder Anzeigeeinheit in der Art einer HMI(Human-Maschine-Interface)-Einheit am Lenker.

Eine solche Halterung für die Anordnung der Bedien- und/oder Anzeigeeinheit ist aus der DE 10 2007 034 311 A1 bekannt und weist eine Befestigung für die Fixierung am Lenker auf. Des Weiteren ist die Halterung mit einer Aufnahme für die Bedien- und/oder Anzeigeeinheit versehen. Die Befestigung ist als Schelle ausgebildet, wobei die Schelle das Lenkerrohr umgebend am Lenker anbringbar ist. Die Aufnahme ist als ein Träger ausgebildet, wobei der Träger auskragend von der Befestigung absteht. Der Träger weist eine von der Schelle abgehende Strebe sowie ein daran anschließendes Stabelement als Auflage für die Bedien- und/oder Anzeigeeinheit auf.

Weitere Halterungen für die Anordnung einer Bedien- und/oder Anzeigeeinheit an einem Fahrzeug sind in den Dokumenten KR 2011 0062675 A, DE 10 2005 036 112 A1, US 6 265 967 B1, DE 298 19 852 U1, US 2012/199620 A1, EP 1 065 140 A2, DE 203 14 073 U1, EP 0 856 459 A2, DE 101 41 750 A1, DE 201 19 499 U1 und FR 2 868 034 A1 beschrieben.

Es hat sich herausgestellt, dass es diesen Halterungen an Stabilität für die Bedien- und/oder Anzeigeeinheit, vor allem im rauen Fahrbetrieb des Fahrzeugs, mangelt. Für eine großbauende Bedien- und/oder Anzeigeeinheit mit einer hohen Funktionalität, wie von heutigen HMI-Einheiten vermehrt geboten, erscheint die bekannte Halterung somit wenig geeignet.

Der Erfindung liegt die Aufgabe zugrunde, die Halterung derart weiterzuentwickeln, dass deren Stabilität erhöht ist.

Insbesondere soll eine Halterung mit einer möglichst zentralen und/oder stabilen und/oder diebstahlsicheren Befestigung des HMI's am Lenker geschaffen werden.

Diese Aufgabe wird durch die Merkmale des Anspruchs 1 gelöst.

Bei der erfindungsgemäßen Halterung ist die Aufnahme als ein Träger ausgebildet, wobei der Träger auskragend von der Befestigung absteht. Geschaffen ist damit eine Halterung für die sichere sowie zuverlässige Anordnung eines HMI(human maschine interface) am Lenker eines Fahrzeugs.

Weiterhin ist die Befestigung als Schelle ausgebildet. Die Schelle ist das Lenkerrohr umgebend am Lenker angebracht.

In einfacher Art und Weise kann die Schelle mittels einer Verschraubung durch Klemmung am Lenkerrohr anbringbar sein.

Der Träger weist eine schräg bezüglich der Vertikalen von der Schelle abgehende Strebe sowie ein daran anschließendes, in etwa horizontal ausgerichtetes Stabelement als Auflage für die Bedien- und/oder Anzeigeeinheit auf.

Der ergonomischen Anordnung für den Benutzer halber kann es sich anbieten, dass die Strebe mit dem Stabelement einen Winkel von in etwa 100 bis 170 Grad einschließt. Als besonders bevorzugt hat sich dabei ein Winkel von in etwa 140 bis 150 Grad erwiesen. Desweiteren kann die Strebe von der Schelle schräg einwärts abgehend bezüglich der Horizontalen ausgerichtet sein. Das daran anschließende Stabelement ist dann in etwa parallel zur Schelle ausgerichtet. Es bietet sich in einfacher Art und Weise weiter an, die Bedien- und/oder Anzeigeeinheit am Stabelement durch Verschraubung, Verrastung o. dgl. zu befestigen.

Zwecks Erhöhung der Stabilität im Fahrbetrieb des Fahrzeugs können die Strebe sowie das Stabelement eine unterschiedliche Resonanzfrequenz besitzen. Hierzu können die Strebe und das Stabelement eine unterschiedliche Steifigkeit aufweisen. Beispielsweise lässt sich die Steifigkeit durch einen unterschiedlichen Querschnitt, unterschiedliches Material o. dgl. für die Strebe und das Stabelement zweckgemäß anpassen.

In kostengünstiger Art und Weise können die Schelle und/oder die Strebe und/oder das Stabelement aus Kunststoff bestehen. In kostengünstiger Weise sowie im Hinblick auf die einfache Verarbeitbarkeit kann es sich dabei um einen thermoplastischen Kunststoff handeln. Zwecks guter Stabilität bietet sich hierfür weiterhin ein glasfaserverstärkter, glaskugelverstärkter o. dgl. Kunststoff an. Der einfachen Herstellbarkeit halber können die Schelle, die Strebe sowie das Stabelement durch Spritzgießen von thermoplastischem Kunststoff einstückig ausgebildet sein.

Weiterhin umfasst die Halterung für die Bedien- und/oder Anzeigeeinheit erfindungsgemäß zwei, jeweils aus einer Befestigung sowie einer Aufnahme bestehende Elemente.

Dadurch liegt die Bedien- und/oder Anzeigeeinheit auf zwei Aufnahmen auf. Damit sind insbesondere Schwingungen der Aufnahme in horizontaler Richtung weitgehend gedämpft.

Die beiden Elemente können zueinander spiegelsymmetrisch ausgebildet sein, derart dass eine mittige Fixierung der Halterung am Lenker ermöglicht ist.

Für eine besonders bevorzugte Ausgestaltung ist nachfolgendes festzustellen. Geschaffen ist eine Integration von elektronischen Bauteilen am beziehungsweise im Zweirad, insbesondere für HMIs an Fahrrädern und/oder Pedelecs und/oder E-Bikes mit folgenden Eigenschaften:
- Die Konstruktion der Befestigungselemente erfolgt mit leicht unterschiedlichen Resonanzfrequenzen, um Eigenschwingungen zu reduzieren.
- Die Montage ist mittig und seitlich möglich.
- Es ist eine Dämpfung, insbesondere von Schwingungen, in einer Vorzugsrichtung zum Schutz der Elektronik erzielt.
- Die Halterung ist steif in allen anderen Richtungen.
- Die Halterung ist bei Bedarf leicht wechselbar.

Die mit der Erfindung erzielten Vorteile bestehen insbesondere darin, dass eine Dämpfung der Eigenschwingungen sowie geringere Beschleunigungswerte während der Fahrt für die Halterung gegeben sind. Dadurch ist die Halterung besonders stabil. Die Bedien- und/oder Anzeigeeinheit ist somit betriebs- und funktionssicher am Lenker des Fahrzeugs angeordnet.

Bin Ausffibrungsbeispiel der Erfindung mit verschiedenen Weiterbildungen und Ausgestaltungen ist in den Zeichnungen dargestellt und wird im folgenden näher beschrieben. Es zeigen
- Fig. 1: ein Fahrrad in schematischer Ansicht,
- Fig. 2: einen Detailausschnitt gemäß Ziff II aus Fig. 1 in perspektischer Ansicht und
- Fig. 3: eine Seitenansicht des Detailauaschnitts gemäß Ziff. II ohne Lenker.

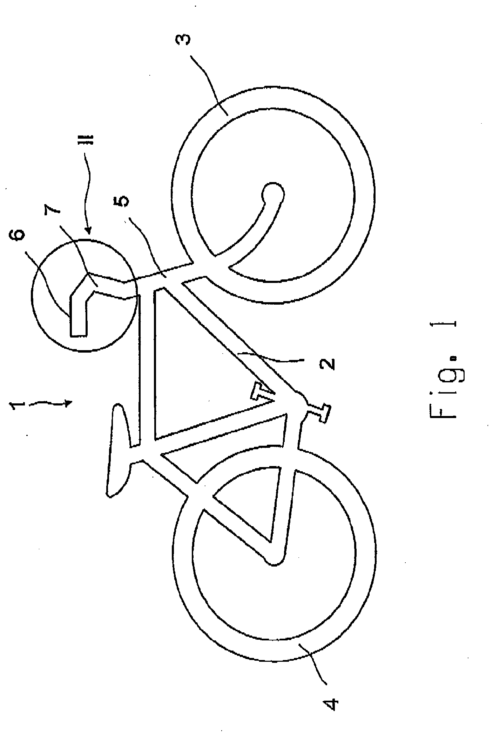

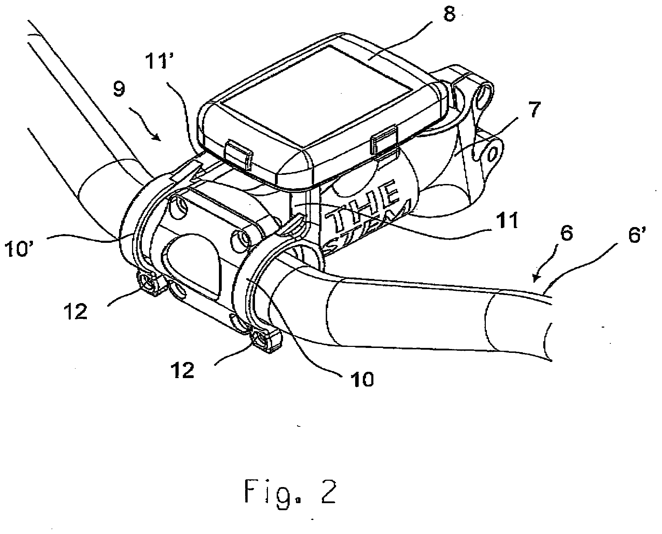

In Fig. 1 ist ein in herkömmlicher Weise ausgestaltetes Fahrrad 1 zu sehen. Das Fahrrad 1 weist einen Rahmen 2, ein Vorderrad 3 sowie ein Hinterrad 4, und eine Lenksäule 5 für das Vorderrad 3 auf. An der Lenksäule 5 ist ein rohrförmiger Lenker 6 mittels eines Lenkervorbaus 7 befestigt. Wie näher in Fig. 2 gezeigt ist, ist über dem Lenkervorbau 7 eine Bedien- und/oder Anzeigeeinheit 8 in der Art eines HMI(Human-Machine-Interface) mittels einer am Lenkerrohr 6' des Lenkers 6 befindlichen Halterung 9 angeordnet

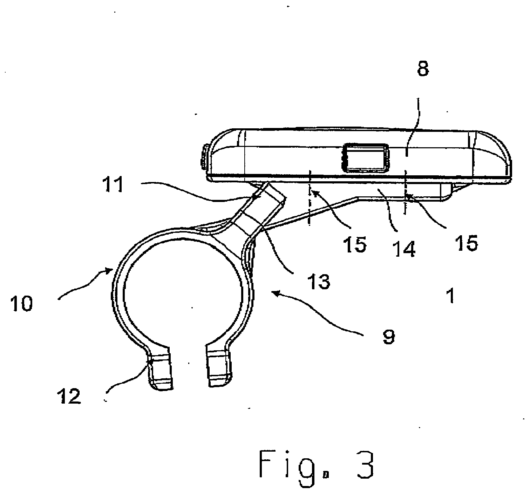

Die Halterung 9 umfasst eine Befestigung 10 für die Fixierung am Lenker 6 sowie eine Aufnahme 11 für die Bedien- und/oder Anzeigeeinheit 8. Wie man näher in Fig. 3 sieht, ist die Aufnahme 11 als ein Träger ausgebildet, wobei der Träger 11 auskragend von der Befestigung 10 absteht. Die Befestigung 10 ist als eine Schelle ausgebildet. Die Schelle 10 ist das Lenkerrohr 6' umgebend am Lenker 6 anbringbar, und zwar ist die Schelle 10 mittels einer in Fig. 2 angedeuteten Verschraubung 12 durch Klemmung am Lenkerrohr 6' angebracht.

Wie man weiter anhand der Fig. 3 sieht, weist der Träger 11 eine schräg bezüglich der Vertikalen von der Schelle 10 abgehende Strebe 13 sowie ein daran anschließendes, in etwa horizontal ausgerichtetes Stabelement 14 als Auflage für die Bedien- und/oder Anzeigeeinheit 8 auf. Die Bedien- und/oder Anzeigeeinheit 8 ist am Stabelement 14 durch eine lediglich schematisch angedeutete Verschraubung 15 befestigt. Selbstverständlich kann die Bedien- und/oder Anzeigeeinheit 8 auch durch Verrastung o. dgl. am Stabelement 14 befestigt sein.

Die Strebe 13 schließt mit dem Stabelement 14 einen Winkel von in etwa 140 bis 150 Grad ein. Falls gewünscht kann der Winkel jedoch auch zwischen in etwa 100 bis 170 Grad liegen. Die Strebe 13 ist von der Schelle 10 schräg einwärts abgehend bezüglich der Horizontalen ausgerichtet. Das an die Strebe 13 anschließende Stabelement 14 ist in etwa parallel zur Schelle 10 ausgerichtet. Weiter besitzen die Strebe 13 sowie das Stabelement 14 eine unterschiedliche Resonanzfrequenz, indem die Strebe 13 und das Stabelement 14 eine unterschiedliche Steifigkeit aufweisen. Beispielsweise können hierfür die Strebe 13 und das Stabelement 14 einen unterschiedlichen. Querschnitt besitzen oder auch aus unterschiedlichen Materialien mit einem unterschiedlichen Blastizitätskoeffizienten bestehen. Dadurch wird eine hohe Stabilität für die Halterung 9 erzielt

Die Schelle 10 und/oder die Strebe 13 und/oder das Stabelement 14 bestehen aus Kunststoff und zwar aus einem thermoplastischen Kunststoff. Zwecks guter Festigkeit bietet es sich an, einen glasfaserverstärkten und/oder glaskugelverstärkten Kunststoff zu verwenden. Weiterhin können die Schelle 10, die Strebe 13 sowie das Stabelement 14 durch Spritzgießen von thermoplastischem Kunststoff einstückig ausgebildet sein.

Wie man weiter anhand von Fig. 2 erkennt, umfasst die Halterung 9 für die Bedien- und/oder Anzeigeeinheit 8 zwei, jeweils aus einer Befestigung 10, 10' sowie einer Aufnahme 11, 11' bestehende Elemente. Dadurch liegt die Bedien- und/oder Anzeigeeinheit 8 auf zwei Aufnahmen 11, 11' auf. Somit sind Schwingungen der Aufnahme 11, 11' in horizontaler Richtung weitgehend gedämpft Schwingungen können damit lediglich in vertikaler Richtung auftreten, was jedoch für die Bedien- und/oder Anzeigeeinheit 8 weniger kritisch ist Wie bereits erwähnt können jedoch auch solche Schwingungen in vertikaler Richtung durch entsprechende Wahl der Steifigkeit weitgehend gedämpft werden. Die beiden Elemente 10/11, 10'/11' sind zueinander spiegelsymmetrisch ausgebildet, derart dass eine mittige Fixierung der Halterung 9, den Lenkervorbau 7 umgebend am Lenker 6 ermöglicht ist.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. So kann die erfindungsgemäße Halterung 9 nicht nur an einem Fahrrad 1 sondern auch an sonstigen Fahrzeugen, insbesondere Zweirädern, welche mit einem Lenker gesteuert werden, Verwendung finden. Beispielsweise kann die Halterung 9 auch an Pedelecs, E-Bikes, Motorräder, Quads o. dgl. zur Anordnung einer Bedien- und/oder Anzeigeeinheit 8 verwendet werden.

### Bezugszeichen-Liste:

- 1:: Fahrrad
- 2:: Rahmen
- 3:: Vorderrad
- 4:: Hinterrad
- 5:: Lenksäule
- 6:: Lenker
- 6':: Lenkerrohr
- 7:: Lenkervorbau
- 8:: Bedien- und/oder Anzeigeeinheit
- 9:: Hälterung
- 10,10';: Befestigung / Schalle
- 11,11':: Aufnahme / Träger
- 12:: Verschraubung (für Schelle)
- 13:: Strebe
- 14:: Stabelammt
- 15:: Verschraubung (für Bedien- und/oder Anzeigeeinheit)

## Patentansprüche

1. Halterung für eine Bedien- und/oder Anzeigeeinheit (8) an einem Fahrzeug mit einem ein Lenkerrohr (6') umfassenden Lenker (6), wie einem Fahrrad (1), einem Pedelec, einem E-Bike, einem Motorrad o. dgl., mit einer Befestigung für die Fixierung am Lenker (6) und mit einer Aufnahme (11) für die Bedien- und/oder Anzeigeeinheit (8), wobei die Halterung (9) für die Bedien- und/oder Anzeigeeinheit (8) zwei, jeweils aus einer Befestigung in Form einer Schelle (10, 10') sowie einer Aufnahme in Form eines Trägers (11, 11') bestehende Elemente (10/11, 10'/11') umfasst,
wobei die beiden Befestigungen jeweils als eine das Lenkerrohr (6') umgebend am Lenker (6) anbringbare Schelle (10, 10') ausgebildet sind, und wobei die beiden Aufnahmen für die Bedien- und/oder Anzeigeeinheit (8) jeweils als ein auskragend von der jeweiligen Schelle (10, 10') abstehender Träger (11, 11') ausgebildet sind,
und wobei die beiden Träger (11, 11') jeweils eine schräg bezüglich der Vertikalen von der jeweiligen Schelle (10, 10') abgehende Strebe (13), sowie ein daran anschließendes, in etwa horizontal ausgerichtetes Stabelement (14) als Auflage für die Bedien- und/oder Anzeigeeinheit (8) aufweisen, derart, dass die Bedien- und/oder Anzeigeeinheit (8) auf den beiden Stabelementen (14) zweier beabstandeter Träger (11, 11') auflegbar ist.

2. Halterung nach Anspruch 1, wobei jeder der beiden Schellen (10, 10') mittels einer Verschraubung (12) durch Klemmung am Lenkerrohr (6') anbringbar ist.

3. Halterung nach Anspruch 1 oder 2, wobei die jeweilige Strebe (13) mit dem jeweiligen Stabelement (14) einen Winkel von in etwa 100 bis 170 Grad, bevorzugterweise von 140 bis 150 Grad, einschließt.

4. Halterung nach einem der Ansprüche 1 bis 3, wobei die Strebe (13) sowie das Stabelement (14) eines jeden Trägers (11) eine unterschiedliche Resonanzfrequenz besitzt, insbesondere indem die Strebe (13) und das Stabelement (14) eines jeden Trägers (11) eine unterschiedliche Steifigkeit beispielsweise durch einen unterschiedlichen Querschnitt, unterschiedliches Material o. dgl., aufweist.

5. Halterung nach einem der Ansprüche 1 bis 4, wobei die Bedien- und/oder Anzeigeeinheit (8) am jeweiligen Stabelement (14) durch Verschraubung (15), Verrastung o. dgl. befestigbar ist.

6. Halterung nach einem der Ansprüche 1 bis 5, wobei die jeweilige Schelle (10) und/oder die jeweilige Strebe (13) und/oder das jeweilige Stabelement (14) aus Kunststoff bestehen, insbesondere aus einem thermoplastischen Kunststoff und/oder aus einem glasfaserverstärkten, glaskugelverstärkten o. dgl. Kunststoff, und dass vorzugsweise die jeweilige Schelle (10), die jeweilige Strebe (13) sowie das jeweilige Stabelement (14) durch Spritzgießen von thermoplastischem Kunststoff einstückig ausgebildet sind.

7. Halterung nach einem der Ansprüche 1 bis 6, wobei die beiden Elemente (10/11, 10'/11') der Halterung (9) zueinander spiegelsymmetrisch ausgebildet sind, derart dass eine mittige Fixierung am Lenker (6) ermöglicht ist.

## Claims

1. A mounting for an operating and/or display unit (8) on a vehicle having a handlebar (6) comprising a handlebar tube (6'), such as a bicycle (1), a pedelec, an e-bike, a motorcycle or the like, comprising a fastening for fixing to the handlebar (6) and comprising a receptacle (11) for the operating and/or display unit (8), wherein the mounting (9) for the operating and/or display unit (8) comprises two elements (10/11, 10'/11'), each consisting of a fastening in the form of a clamp (10, 10') and a receptacle in the form of a carrier (11, 11'),
wherein the two fastenings are each formed as a clamp (10, 10') attachable to the handlebar (6) in a manner surrounding the handlebar tube (6'), and wherein the two receptacles for the operating and/or display unit (8) are each formed as a carrier (11, 11') protruding from the respective clamp (10, 10') in a cantilevered manner,
and wherein the two carriers (11, 11') each have a strut (13) angled obliquely with respect to the vertical of the respective clamp (10, 10'), and an adjoining, approximately horizontally oriented rod element (14) as a support for the operating and/or display unit (8), such that the operating and/or display unit (8) can be placed on the two rod elements (14) of two spaced-apart carriers (11, 11').

2. The mounting according to claim 1, wherein each of the two clamps (10, 10') is attachable to the handlebar tube (6') by clamping by means of a screw fitting (12).

3. The mounting according to claim 1 or 2, wherein the respective strut (13) forms an angle with the respective rod element (14) of approximately 100 to 170°, preferably from 140 to 150°.

4. The mounting according to one of claims 1 to 3, wherein the strut (13) and the rod element (14) of each carrier (11) has a different resonance frequency, in particular in that the strut (13) and the rod element (14) of each carrier (11) have a different rigidity, for example due to a different cross-section, different material or the like.

5. The mounting according to one of claims 1 to 4, wherein the operating and/or display unit (8) can be fastened to the respective rod element (14) by a screw fitting (15), latching or the like.

6. The mounting according to one of claims 1 to 5, wherein the respective clamp (10) and/or the respective strut (13) and/or the respective rod element (14) are made of plastics material, in particular of a thermoplastic material and/or of a glass fibre-reinforced plastics material, a glass-bead reinforced plastics material or similar plastics material, and preferably the respective clamp (10), the respective strut (13) and the respective rod element (14) are formed in one piece by injection moulding of thermoplastic material.

7. The mounting according to one of claims 1 to 6, wherein the two elements (10/11, 10'/11') of the mounting (9) are formed to be mutually mirror-symmetrical, such that central fixation to the handlebar (6) is enabled.

## Revendications

1. Support pour une unité de commande et/ou d'affichage (8) sur un véhicule avec guidon (6) comprenant un tube de guidon (6'), tel qu'une bicyclette (1), une bicyclette à assistance électrique au pédalage, un vélo électrique, une moto ou analogue, avec une fixation à fixer au guidon (6) et avec un logement (11) pour l'unité de commande et/ou d'affichage (8), le support (9) pour l'unité de commande et/ou d'affichage (8) comprenant deux éléments (10/11, 10'/11') constitués chacun d'une fixation en forme de bride (10, 10') et d'un logement en forme de support (11, 11'),
les deux fixations étant réalisées chacune sous la forme d'une bride (10, 10') pouvant être fixée au guidon (6) en encerclant le tube de guidon (6') et les deux logements pour l'unité de commande et/ou d'affichage (8) étant chacun réalisé sous forme d'un support (11, 11') dépassant en porte à faux de la bride respective (10, 10'),
et les deux supports (11, 11') présentant chacun une jambe de force (13) s'étendant obliquement par rapport à la verticale depuis la bride respective (10, 10') ainsi qu'un élément de tige (14) adjacent à la jambe de force et aligné à peu près horizontalement comme surface d'appui pour l'unité de commande et/ou d'affichage (8) de telle sorte que l'unité de commande et/ou d'affichage (8) puisse être placée sur les deux éléments de tige (14) de deux supports écartés (11, 11').

2. Support selon la revendication 1, dans lequel chacune des deux brides (10, 10') peut être montée par serrage sur le tube de guidon (6') au moyen d'un vissage (12).

3. Support selon la revendication 1 ou 2, dans lequel la jambe de force respective (13) forme avec l'élément de tige respectif (14) un angle d'environ 100 à 170 degrés, de préférence 140 à 150 degrés.

4. Support selon une des revendications 1 à 3, dans lequel la jambe de force (13) ainsi que l'élément de tige (14) de chaque support (11) possèdent une fréquence de résonance différente, en particulier en ce que la jambe de force (13) et l'élément de tige (14) de chaque support (11) ont une rigidité différente, en raison par exemple d'une section transversale différente, d'un matériau différent ou analogue.

5. Support selon une des revendications 1 à 4, dans lequel l'unité de commande et/ou d'affichage (8) peut être fixée à l'élément de tige respectif (14) par vissage (15), enclenchement ou analogue.

6. Support selon une des revendications 1 à 5, dans lequel la bride respective (10) et/ou la jambe de force respective (13) et/ou l'élément de tige respectif (14) sont en matière plastique et notamment en matière thermoplastique et/ou en matière plastique renforcée de fibres de verre, de billes de verre ou analogue et en ce que de préférence la bride respective (10), la jambe de force respective (13) et l'élément de tige respectif (14) sont formés en une seule pièce par moulage par injection de matière thermoplastique.

7. Support selon une des revendications 1 à 6, dans lequel les deux éléments (10/11, 10'/11') du support (9) sont symétriques en miroir l'un par rapport à l'autre de telle sorte qu'une fixation centrale sur le guidon (6) soit possible.
